Europäisches Patentamt

European Patent Office

Office européen des brevets

(11) Numéro de publication : **0 078 201**
**B1**

(12) # FASCICULE DE BREVET EUROPÉEN

(45) Date de publication du fascicule du brevet :
30.07.86

(21) Numéro de dépôt : 82401922.8

(22) Date de dépôt : 20.10.82

(51) Int. Cl.⁴ : **F 16 B 39/10, F 16 B 41/00,
F 16 B 21/18**

(54) **Ensemble de freinage de vis.**

(30) Priorité : 21.10.81 FR 8119753

(43) Date de publication de la demande :
04.05.83 Bulletin 83/18

(45) Mention de la délivrance du brevet :
30.07.86 Bulletin 86/31

(84) Etats contractants désignés :
BE CH DE FR GB LI

(56) Documents cités :
DE-A- 2 739 644
DE-C- 90 546

(73) Titulaire : JEUMONT-SCHNEIDER Société anonyme
dite:
31-32, Quai de Dion Bouton
F-92811 Puteaux Cedex (FR)

(72) Inventeur : Falbierski, Jean-Jacques
1341, rue de Bersillies
F-59460 Jeumont (FR)

(74) Mandataire : Lejet, Christian
Société JEUMONT-SCHNEIDER 31-32, Quai de Dion
Bouton
F-92811 Puteaux Cedex (FR)

## Description

La présente invention concerne un ensemble de freinage et de retenue de vis dont la tête est logée dans un orifice prévu à cet effet dans la pièce où la vis est introduite. On connaît de nombreux dispositifs et procédés permettant de freiner une vis, c'est-à-dire de l'empêcher de se dévisser sous l'effet de sollicitations vibratoires ou de dilatations thermiques.

Le procédé le plus simple consiste à effectuer le collage de la vis dans la pièce où elle est introduite au niveau des filets. Il est connu également de disposer entre la pièce et la tête de la vis une rondelle déformable qui s'écrase élastiquement en maintenant la vis sous tension. Ces dispositif et procédé présentent toutefois l'inconvénient de ne pas être toujours très fiables et de ne pas retenir la tête de la vis en cas de rupture de celle-ci.

On sait, en effet, qu'il est indispensable que la tête des vis soit retenue même en cas de rupture, notamment dans l'industrie nucléaire lorsqu'elles équipent des pompes primaires. Dans ce but, comme il est décrit dans le brevet DE-A-2 739 644, Fig. 5 et 6, on peut utiliser une rondelle mise en place dans une gorge par déformation élastique et assurant le freinage et la retenue de la vis ensemble avec une autre rondelle qui est engagée dans la tête de la vis par déformation plastique. Toutefois, cette solution présente les inconvénients de nécessiter des rainures et donc un usinage complémentaire et d'une mise en place relativement longue, en particulier si on se réfère aux problèmes d'irradiation ou de contamination chimique dans l'industrie nucléaire et d'une pollution éventuelle du circuit dans lequel est disposé ce frein par des morceaux de la rondelle déformée plastiquement.

L'invention a pour but d'obvier à ces inconvénients au moyen d'un ensemble permettant d'assurer simultanément un freinage efficace de la vis et une retenue de la tête de vis en cas de rupture de cette dernière.

L'ensemble de freinage et de retenue de vis dont la tête est logée dans un orifice prévu à cet effet dans la pièce où la vis est introduite, comprend une rondelle déformable élastiquement dans le sens radial et introduite dans l'orifice après mise en place de la vis.

Selon l'invention, cet orifice affecte la forme d'un tronc de cône dont le sommet est dirigé vers la tête de la vis, et la rondelle est appliquée contre la face extérieure de la tête de la vis, le diamètre extérieur de cette rondelle étant sensiblement égal à celui de la base du cône.

De préférence, cette rondelle affecte également une forme tronconique complémentaire de celle de l'orifice. Elle peut être constituée par un anneau coupé selon un rayon, dans lequel deux trous sont pratiqués symétriquement par rapport à ce rayon de manière à permettre l'introduction des deux pointes d'un outil de mise en place de la rondelle, outil affectant la forme d'un compas.

L'invention sera mieux comprise et d'autres buts, avantages et caractéristiques de celle-ci apparaîtront plus clairement à la lecture de la description qui suit d'un mode préféré de réalisation, description à laquelle une planche de dessins est annexée.

La Figure 1 représente, en coupe transversale, un ensemble de freinage conformément à l'invention.

La Figure 2 représente, vue en coupe et vue en dessus, la rondelle utilisée dans l'ensemble de la Figure 1, et,

La Figure 3 représente schématiquement un outil pour la mise en place de cette rondelle.

En référence maintenant à ces figures, la pièce 1 doit être assemblée à la pièce 2 par vissage. Dans ce but, on utilise une vis 3, par exemple à tête plate 4.

Un orifice 5 est pratiqué dans la pièce 1 de manière à affecter la forme d'un tronc de cône dont le sommet est dirigé dans le même sens que la tête 4 de la vis 3 par rapport à cette dernière.

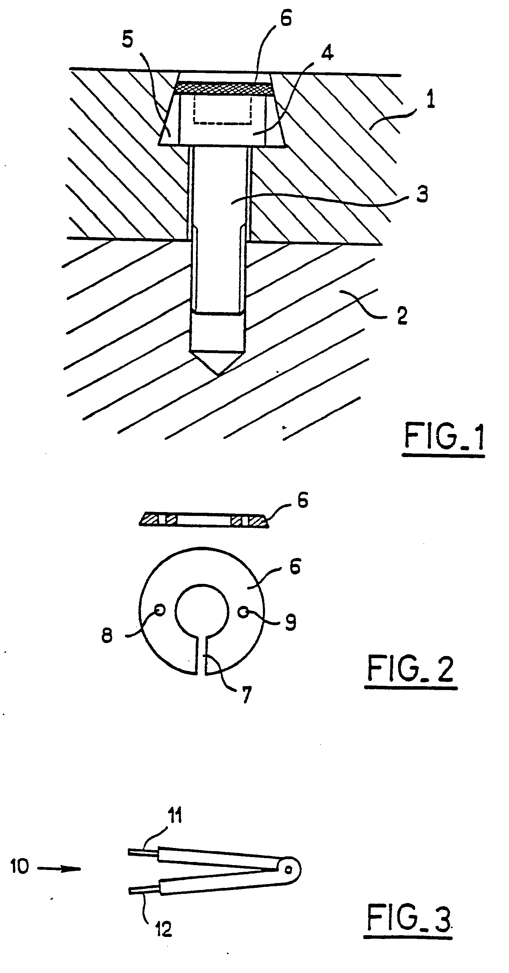

Après vissage, on introduit une rondelle 6 dans l'orifice 5, rondelle qui vient s'appliquer contre la tête 4 sous l'effet de la forme de l'orifice 5. Pour ce faire, la rondelle 6 est déformable élastiquement dans le sens radial. Comme représenté figure 2, dans ce but, la rondelle qui est constituée par un anneau est coupée selon un des rayons 7.

En donnant à cette rondelle une forme tronconique sur sa tranche, on lui permet de s'appliquer avec une force importante sur la tête 4 de la vis 3 qui est alors prise en sandwich entre la pièce 1 et la rondelle 6. Les forces de frottement exercée empêchent alors la vis 3 de se dévisser et ces forces sont d'autant plus importantes que la vis commence à se desserrer du fait de la forme de l'orifice 5. En outre, cette forme présente l'avantage essentiel de permettre à la rondelle 6 de retenir la tête 4 de la vis 3, en cas de rupture de cette dernière. La tête ne sort donc pas de l'orifice 5 et ne risque ainsi pas de venir perturber inopportunément le fonctionnement du matériel qu'elle équipe.

Cependant une telle rondelle, dont le diamètre extérieur est sensiblement égal à celui de la base du cône de l'orifice 5, peut être délicate à introduire dans un orifice dont l'embouchure présente un diamètre plus petit. Pour pallier à cet inconvénient, deux trous 8 et 9 sont pratiqués dans la rondelle qui affecte la forme d'un anneau, symétriquement par rapport à la coupure radiale 7.

Un outil très simple 10, tel que représenté figure 3, et affectant la forme d'un compas, peut être alors utilisé pour l'introduction de la rondelle 6 dans l'orifice 5. Les deux pointes 11 et 12 de ce compas, introduites respectivement dans les trous 8 et 9 de la rondelle 6, permettent de déformer manuellement cette dernière, de manière à réduire élastiquement son diamètre pendant l'opération consistant en son introduction dans l'orifice 5.

Après introduction, la tranche de la rondelle 6 vient en contact avec la paroi conique de l'orifice 5 et, par réaction, la rondelle vient s'appliquer naturellement contre la tête 4 de la vis, assurant ainsi son freinage et son maintien en cas de rupture.

On peut disposer entre la tête 4 de la vis et la pièce 1 une rondelle élastique compressible comme dans l'Art antérieur, ce qui rend le freinage de la vis extrêmement sûr. En outre, même si la vis représentée est une vis à tête plate dont on n'a pas représenté le nombre de pans, cet ensemble de freinage peut être utilisé avec n'importe quel type de vis.

Enfin, la rondelle 6 peut être de forme plate telle que représentée, ou bien de forme concave ou convexe.

L'ensemble de freinage et de retenue de vis selon l'invention, qui trouve son application préférée dans le domaine des pompes des réacteurs nucléaires, peut être utilisé à la manière des dispositifs conventionnels dans tous les domaines, en particulier lorsque la place pour loger ceux-ci fait défaut et que la tête de la vis doit être retenue en cas de rupture.

**Revendications**

1. Ensemble de freinage et de retenue de vis (3) dont la tête (4) est logée dans un orifice (5) prévu à cet effet dans la pièce (1) où la vis (3) est introduite, comprenant une rondelle (6) déformable élastiquement dans le sens radial et introduite dans ledit orifice (5) après mise en place de la vis (3), caractérisé en ce que ledit orifice (5) affecte la forme d'un tronc de cône dont le sommet est dirigé vers la tête (4) de la vis (3) et en ce que la rondelle (6) est appliquée contre la face extérieure de la tête (4) de la vis (3), le diamètre extérieur de ladite rondelle (6) étant sensiblement égal à celui de la base dudit cône.

2. Ensemble selon la revendication 1, caractérisé en ce que ladite rondelle (6) affecte une forme tronconique complémentaire de celle dudit orifice (5).

3. Ensemble selon la revendication 1 ou 2, caractérisé en ce que ladite rondelle (6) est constituée par un anneau coupé selon un de ses rayons (7).

4. Ensemble selon la revendication 3, caractérisé en ce que deux trous (8, 9) sont pratiqués dans ledit anneau symétriquement par rapport au rayon de coupure (7), de manière à permettre l'introduction des pointes (11, 12) d'un outil de mise en place de ladite rondelle (6), outil (10) affectant la forme générale d'un compas.

**Claims**

1. Set for locking and retaining a screw (3) whose head (4) is accommodated in an orifice (5) provided for that purpose in the piece (1) into which the screw (3) is introduced, comprising a washer (6) which is elastically deformable in the radial direction and is introduced into the said orifice (5) after the screw (3) has been positioned, characterised in that the said orifice (5) is given the form of a truncated cone whose vertex is directed towards the head (4) of the screw (3), and in that the washer (6) is applied against the external face of the head (4) of the screw (3), the external diameter of the said washer (6) being substantially equal to that of the base of the said cone.

2. Set according to claim 1, characterised in that the said washer (6) has a frustoconical form complementing that of the said orifice (5).

3. Set according to claim 1 or 2, characterised in that the said washer (6) is constituted by a ring cut along one of its radii (7).

4. Set according to claim 3, characterised in that two holes (8, 9) are formed in the said ring symmetrically with respect to the cut radius (7), so as to allow the introduction of points (11, 12) of a tool for positioning the said washer (6), this tool (10) being in the general form of a pair of compasses.

**Patentansprüche**

1. Hemm- und Halteeinheit für eine Schraube (3), deren Kopf (4) in einer Öffnung (5) aufgenommen ist, die zu diesem Zweck in dem Teil (1) vorgesehen ist, in welches die Schraube (3) eingeführt ist, mit einer elastisch in Radialrichtung deformierbaren Rundscheibe (6), die in die genannte Öffnung (5) nach Einsetzen der Schraube (3) eingeführt wird, dadurch gekennzeichnet, daß die genannte Öffnung (5) die Form eines Kegelstumpfes aufweist, dessen Scheitel zum Kopf (4) der Schraube (3) gerichtet ist, und daß die Rundscheibe (6) gegen die Außenfläche des Kopfes (4) der Schraube (3) angelegt ist, wobei der Außendurchmesser der genannten Rundscheibe (6) im wesentlichen gleich dem der Basis des genannten Kegels ist.

2. Einheit nach Anspruch 1, dadurch gekennzeichnet, daß die genannte Rundscheibe (6) eine Kegelstumpfform annimmt, welche komplementär zu der der genannten Öffnung (5) ist.

3. Einheit nach Anspruch 1 oder 2, dadurch gekennzeichnet, daß die genannte Rundscheibe (6) durch einen Ring gebildet ist, der entlang einem seiner Radien (7) geschnitten ist.

4. Einheit nach Anspruch 3, dadurch gekennzeichnet, daß zwei Löcher (8, 9) in dem genannten Ring symmetrisch zu dem Schnittradius (7) angebracht sind, dergestalt, daß die Einführung von Spitzen (11, 12) eines Werkzeugs zum Einbringen der genannten Rundscheibe (6) ermöglicht wird, wobei dieses Werkzeug (10) allgemein zirkelförmig ist.

FIG. 1

FIG. 2

FIG. 3